Europäisches Patentamt

European Patent Office

Office européen des brevets

(19)

(11) Numéro de publication: **0 485 681 A1**

# DEMANDE DE BREVET EUROPEEN

(21) Numéro de dépôt: **90810871.5**

(22) Date de dépôt: **12.11.90**

(51) Int. Cl.5: **G01C 17/04**

(43) Date de publication de la demande:
**20.05.92 Bulletin 92/21**

(84) Etats contractants désignés:
**AT BE DE DK ES FR GB GR IT LU NL SE**

(71) Demandeur: **DETRA SA**
**35, Rue Scholl**
**CH-2504 Bienne(CH)**
Demandeur: **FABRIOUE D'EBAUCHES DE**
**SONCEBOZ S.A**
**Rouges-Terres 61**
**CH-2068 Hauterive(CH)**

(72) Inventeur: **Tu, Mai Xuan**
**Chiésaz 13**
**CH-1024 Ecublens(CH)**
Inventeur: **Schwab, Michel**
**Rue du Cornouiller 4**
**CH-2502 Bienne(CH)**

(74) Mandataire: **Rochat, Daniel Jean et al**
**Bovard SA Ingénieurs-Conseils ACP**
**Optingenstrasse 16**
**CH-3000 Bern 25(CH)**

(54) **Dispositif de mesure de la direction du champ magnétique terrestre.**

(57) Boussole dont la pièce mobile est consituée d'un aimant permanent central [11] et de pièces polaires en matériau ferromagnétique doux [12A, 12b] afin d'augmenter le couple d'orientation.

EP 0 485 681 A1

Rank Xerox (UK) Business Services
(-/2.19/2.0)

La présente invention concerne une boussole permettant de détecter la direction du champ magnétique terrestre. Il existe sur le marché de nombreuses réalisations se basant sur le principe suivant: un aimant permanent, de forme allongée, utilisé comme aiguille d'indication de direction, pivote autour d'un axe, tout ce système étant le plus souvent mis dans un fluide afin de diminuer le frottement et d'amortir les oscillations mécaniques.

Afin de minimiser le frottement, l'épaisseur de l'aimant utilisé dans les boussoles selon l'art antérieur précédemment décrites est très faible par rapport à sa longueur. On comprend dès lors que, pour des raisons de rigidité, la matière utilisée pour réaliser ces aimants doit posséder de bonnes caractéristiques mécaniques. Le plus souvent, on utilise pour ces aimants des matériaux ferromagnétiques durs à base métallique. Ces matériaux possèdent malheureusement de médiocres propriétés magnétiques, en particulier un faible champ coercitif, ce qui entraîne une faible valeur du produit d'énergie caractérisant un aimant permanent.

Le couple d'orientation d'une boussole dans un champ magnétique étant lié au produit d'énergie de l'aimant, il est donc très faible dans une boussole classique. De plus, lorsque ces boussoles sont soumises accidentellement à un champ magnétique intense, par exemple lorsqu'on place ces boussoles à proximité d'un autre aimant permanent de très grand produit d'énergie, l'aiguille aimantée de la boussole classique peut être démagnétisée en raison de son faible champ coercitif.

Le but de la présente invention est de remédier aux inconvénients précités grâce aux moyens revendiqués. L'invention sera mieux comprise à la lecture de la description qui va suivre, en se référant au dessin annexé, dans lequel:

la fig. 1 représente une boussole classique selon l'art antérieur,

la fig. 2 représente une des formes d'exécution possibles de la boussole selon l'invention,

la fig. 3 représente la partie mobile de la boussole selon l'invention de la fig. 2,

la fig. 4 représente une première variante d'exécution des pièces polaires de la boussole selon l'invention,

la fig. 5 représente une deuxième variante d'exécution des pièces polaires de la boussole selon l'invention.

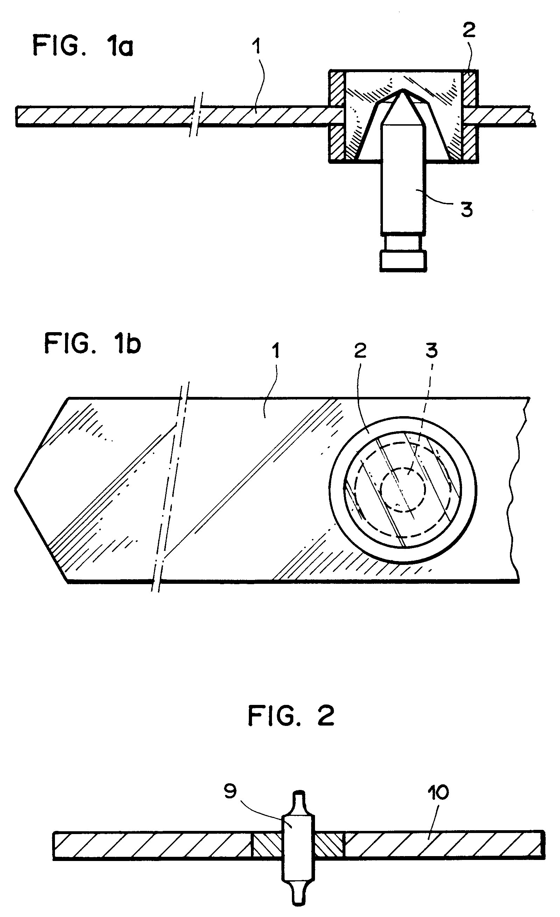

La fig. 1 représente deux vues d'une boussole classique selon l'art antérieur, composée d'uen aiguille de direction 1 en forme de barreau d'aimant, montée sur un coussinet 2 pivotant autour d'un axe fixe 3 fixé à un boitier (non représenté). Généralement, le dit boîtier est étanche et est rempli d'huile afin d'amortir le mouvement d'oscillation de l'aiguille 1 autour de l'axe 3.

La fig. 2 illustre une forme d'exécution de la boussole selon l'invention. Dans cette figure, la pièce mobile 10 pivote autour de l'axe 9 et, comme dans le cas d'une boussole classique, tout le système peut être mis dans un fluide afin d'amortir les oscillations mécaniques.

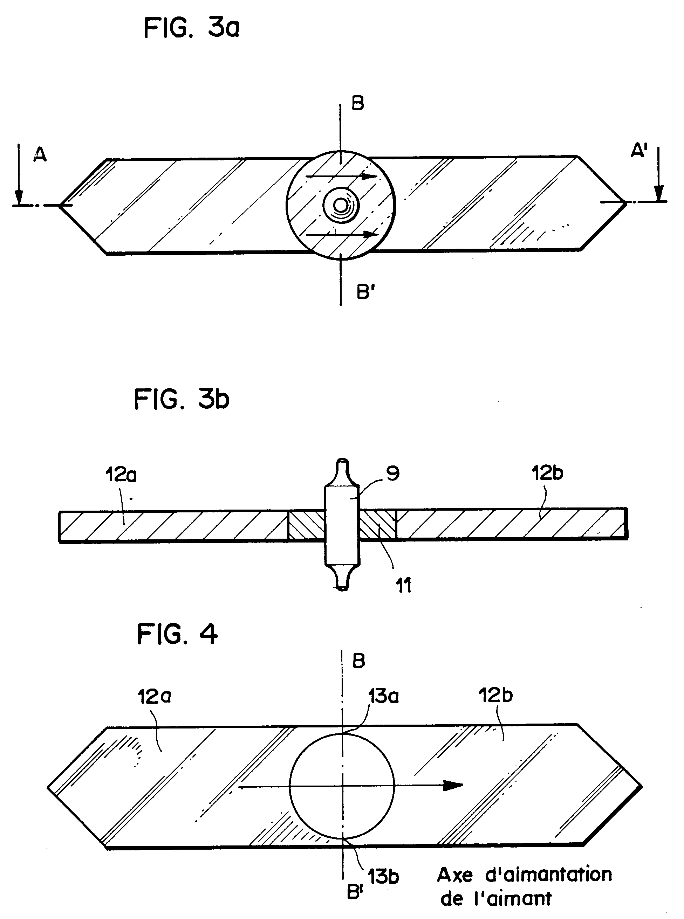

La fig. 3 représente les détails de la pièce mobile 10 de la fig. 2. Cette pièce est composée d'un aimant central 11 portant l'axe de pivotement 9 et deux pièces polaires 12a et 12b. L'aimant central est réalisé en matériau fritté à très haut produit d'énergie tel que le samarium cobalt ou le fer néodym, dont le produit d'énergie se situe entre 200 et 300kJ/m$^3$. L'utilisation d'un matériau fritté relativement cassant est possible grâce à la petite dimension de l'aimant central. Les pièces polaires 12a et 12b sont réalisées en matériau ferromagnétique doux à très haute perméabilité; elles servent à collecter le champ terrestre et à le canaliser jusqu'au niveau de l'aimant afin d'augmenter le couple d'orientation. La pièce mobile dans la boussole réalisée selon l'invention permet donc l'utilisation d'un aimant à haut produit d'énergie, tout en obtenant une bonne rigidité mécanique de la pièce.

Dans l'exemple de forme d'exécution représenté par la fig. 3, les deux pièces polaires 12a et 12b sont distinctes et se trouvent des deux côtés de l'axe BB' perpendiculaire à la direction d'aimantation de l'aimant.

Pour faciliter le montage de cette pièce mobile, les pièces polaires 2a et 2b peuvent être reliées entre elles par des zones saturables à réluctance élevée. La fig. 4 représente une première variante d'exécution des pièces polaires de la boussole selon l'invention. Dans cette figure, les pièces polaires 12a et 12b sont reliées entre elles par les zones saturables 13a et 13b se trouvant dans le même plan. Ces zones saturables possédant des sections relativement faibles par rapport à celles des pièces polaires 12a et 12b, elles court-circuitent partiellement l'aimant central. Sous l'effet du flux de l'aimant, elles sont saturées et présentent des zones à réluctance élevée. De ce fait, les pièces polaires à zones saturables fournissent les mêmes effets que les pièces polaires séparées.

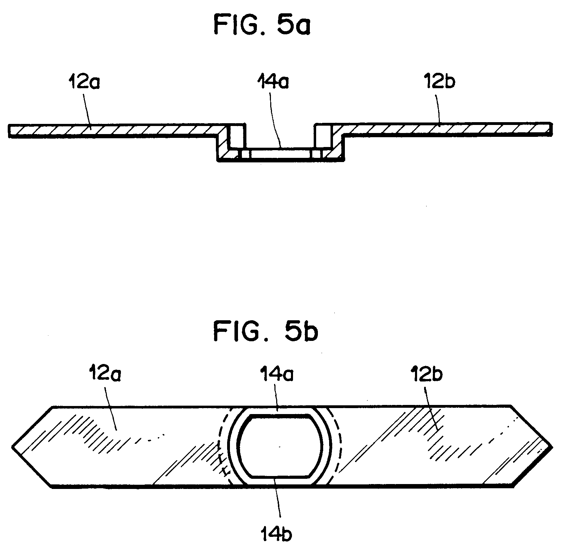

La fig. 5 représente une deuxième variante d'exécution des pièces polaires de la boussole selon l'invention. Dans cette figure, les pièces polaires 12a et 12b sont reliées entre elles par les zones saturables 14a et 14b se trouvant dans un plan différent. Ce changement de plan obtenu par pliage à partir d'une pièce plate permet d'aménager l'emplacement de l'aimant central.

**Revendications**

1. Boussole comprenant des moyens de pivotement, des moyens d'amortissement et une pièce mobile, caractérisée en ce que la dite pièce mobile est constituée d'un aimant permanent bipolaire se situant sensiblement au centre de ladite pièce mobile et de pièces polaires en matériau ferromagnétique doux s'étendant de chaque côté dudit aimant permanent.

2. Boussole selon la revendication 1, caractérisée en ce que lesdites pièces polaires sont reliées entre elles par des zones à réluctance élevée.

3. Boussole selon la revendication 2, caractérisée en ce que les dites zones à réluctance élevée sont des zones saturables possédant des sections sensiblement plus faibles que celles des dites pièces polaires.

4. Boussole selon l'une des revendications précédentes, caractérisée par le fait que l'axe passant par les dites zones à réluctance élevée est sensiblement perpendiculaire à l'axe d'aimantation de l'aimant.

FIG. 1a

FIG. 1b

FIG. 2

## FIG. 3a

## FIG. 3b

## FIG. 4

Axe d'aimantation
de l'aimant

## FIG. 5a

12a          14a          12b

## FIG. 5b

12a          14a          12b

14b

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 117 724  (LIST)<br>* Page 1, lignes 19-26 *<br>--- | 1 | G 01 C  17/04 |
| A | EP-A-0 181 834  (STOLZ)<br>* Page 3, lignes 24-29 *<br>----- | 1 | |

**DOMAINES TECHNIQUES RECHERCHES (Int. Cl.5)**

G 01 C

**Le présent rapport a été établi pour toutes les revendications**

| Lieu de la recherche | Date d'achèvement de la recherche | Examinateur |
|---|---|---|
| LA HAYE | 10-06-1991 | HOEKSTRA F.R. |

EPO FORM 1503 03.82 (P0402)